# EUROPEAN PATENT APPLICATION

(11) **EP 4 721 638 A1**
(43) Date of publication of application: **08.04.2026**
(21) Application number: 24813889.3
(22) Date of filing: 02.04.2024
(51) Int. Cl.: A47L 11/40

(54) **CLEANING ASSEMBLY FOR CLEANING APPARATUS, AND CLEANING APPARATUS**

(30) Priority: 31.05.2023 CN 202310641672
(71) Applicant: Hangzhou Ezviz Software Co., Ltd., Zhejiang 310051 (CN)
(72) Inventor: ZHANG, Lele, Hangzhou, Zhejiang 310051 (CN); JIN, Jingyang, Hangzhou, Zhejiang 310051 (CN); MENG, Xiangwei, Hangzhou, Zhejiang 310051 (CN)
(74) Representative: Schmitz, Joseph
(86) International application number: PCT/CN2024/085626
(87) International publication number: WO 2024/244683

(57) **Abstract**

A cleaning assembly for a cleaning apparatus. The cleaning assembly is configured to be driven by a power source to rotate, so as to clean a surface to be cleaned. The cleaning assembly comprises: a cleaning body (1), wherein an accommodating cavity(12) and a channel (110), which connects the accommodating cavity (12) to the outside, are formed inside the cleaning body (1); a rotating block (2), which is arranged in the accommodating cavity (12) and can slide along the channel (110) relative to the cleaning body (1); and a transmission block (3), which is fixedly mounted between the rotating block (2) and an output shaft of a power source and can be driven by the power source to drive the rotating block (2) to rotate. The transmission block (3) is in transmission fit with the cleaning body (1) by means of a spiral slope structure (4), and an elastic member (6) in a compressed state is provided between the rotating block (2) and the cleaning body (1), such that when the transmission block (3) rotates clockwise, the cleaning body (1), which is pressed by the transmission block (3), descends to a first set position suitable for cleaning; and when the transmission block(3) rotates anticlockwise, the cleaning body (1) ascends, under the action of the elastic member (6), to a second set position suitable for avoiding an obstacle.

## Description

The present application claims the priority to a Chinese patent application No. 202310457189.6 filed with the China National Intellectual Property Administration on May 31, 2023 and entitled "a cleaning assembly for cleaning apparatus and cleaning apparatus device", which is incorporated herein by reference in its entirety.

### Technical Field

The present application relates to the technical field of cleaning apparatus, specifically to a cleaning assembly for a cleaning apparatus and a cleaning apparatus.

### Background

With the development of technology, an increasing number of cleaning tasks such as sweeping, mopping, painting, etc., are gradually being replaced by intelligent products. Such cleaning apparatus generally includes a power source and a cleaning assembly, where the power source drives the cleaning assembly to rotate to clean a surface to be cleaned.

Taking the common sweeper in daily life as an example, when performing a cleaning task, the sweeper mainly relies on its roller brush in the middle to roll up dust on the ground, and utilizes the airflow generated by a fan inside the main body to suck the dust into a dust container.

Due to the limited coverage area of the roller brush during operation, two side brushes are arranged on both sides of the front roller brush. When rotating on the ground, the side brushes gather dust from both sides of the roller brush into the area that can be covered by the roller brush, facilitating cleaning by the roller brush and thereby increasing the coverage area of the sweeper during cleaning.

The robotic vacuum cleaners in related technologies each arrange one or two side brushes at the bottom of the machine. These side brushes are fixed to a chassis and remain in a rotating state during operation. When the machine climbs over an obstacle (e.g., a carpet, impact protection pad for children, etc.), the side brushes, as a cleaning assembly, may hinder the machine from climbing or roll up the carpet, causing abnormal operation of the machine and finally severely affecting user experience. Therefore, in some cleaning apparatuses, the cleaning assembly is designed as a liftable structure. However, in order to achieve lifting of the cleaning assembly, it is necessary to additionally provide a driving mechanism and a transmission mechanism, resulting in a complex structure. This not only increases assembly difficulty, maintenance difficulty and manufacturing costs, but also increases the overall design difficulty and size of the cleaning apparatus as a certain space needs to be additionally provided for the additional driving mechanism and transmission mechanism, which contradicts the trend toward apparatus miniaturization.

### Summary

The present application aims to solve a technical problem in the related art. To this end, the present application provides a cleaning assembly for a cleaning apparatus and a cleaning apparatus.

To achieve the above objective, the present application adopts the following technical solution: a cleaning assembly for a cleaning apparatus, configured to rotate under drive of a power source to clean a surface to be cleaned, wherein the cleaning assembly comprises: a cleaning body, wherein a cavity is formed inside the cleaning body and the cleaning body) has a channel connecting the cavity with outside; a rotating block, arranged within the cavity and capable of sliding relative to the cleaning body along the channel; and a transmission block, fixedly installed between the rotating block and an output shaft of the power source and capable of driving the rotating block to rotate under drive of the power source; wherein the transmission block and the cleaning body are in transmission cooperation via a helical ramp structure, and an elastic member in a compressed state is arranged between the rotating block and the cleaning body, such that the cleaning body descends under a pressing action of the transmission block to a first preset position suitable for cleaning when the transmission block rotates forward, and the cleaning body ascends under an action of the elastic member to a second preset position suitable for obstacle avoidance when the transmission block rotates reversely.

Application of the present application has the following beneficial effects: by arranging the transmission block between the cleaning body and the power source and arranging a helical ramp structure between the transmission block and the cleaning body for transmission cooperation, when the transmission block rotates forward, the cleaning body does not synchronously rotate with the rotation of the transmission block due to inertia. Since the transmission block only rotates without descending or ascending, the helical ramp structure exerts a pushing and pressing action on the cleaning body, to drive the cleaning body to descend. When the transmission block rotates reversely, the cleaning body also does not synchronously rotate with the rotation of the transmission block due to inertia, and under the elastic force of the elastic member, the cleaning body 1 is driven to ascend and return to its original position. In this way, the purpose of switching the cleaning body between the first preset position and the second preset position is achieved. Meanwhile, the cleaning assembly cleverly utilizes the principle of inertia and achieves this with a simple structure, thus occupying small space and aligning with the trend of device miniaturization, while also exhibiting good adaptability to existing cleaning apparatuses (due to the cleaning assembly occupies small space, there is generally no need to make larger exterior design for existing cleaning apparatus) and having low manufacturing costs.

Optionally, the helical ramp structure includes a first helical ramp formed on the transmission block and a second helical ramp formed on the cleaning body, and the first helical ramp and the second helical ramp are adapted to each other.

Optionally, each of the first helical ramp and the second helical ramp has a continuous ramp segment and a planar segment, the planar segment of the first helical ramp and the planar segment of the second helical ramp press against each other when the cleaning body is in the first preset position.

Optionally, each of the first helical ramp and the second helical ramp further has a first limiting portion on a side of the ramp segment and a second limiting portion on a side of the planar segment, and the first limiting portion and the second limiting portion are configured to limit the ascending and descending stroke of the cleaning body between the first preset position and the second preset position.

Optionally, the cleaning body includes a cleaning base and a cover detachably assembled on the cleaning base, a cavity is formed between the cover and the cleaning base, and the cover forms the channel; the elastic member is located within the cavity, and the helical ramp structure is formed between the cover and the transmission block.

Optionally, the elastic member is a spring, and the rotating block is formed with a surrounding edge, one end of the spring is arranged on an inner wall of the cover, and the other end of the spring presses against the surrounding edge.

Optionally, the cleaning assembly further includes a fixed base which is configured to be cable of being fixedly installed on the cleaning apparatus; a hysteresis structure is arranged between the fixed base and the cleaning body, and the hysteresis structure is configured to delay the rotation movement of the cleaning body via friction when the transmission block starts to rotate forward. In this way, in addition to the inertia effect, the rotation movement of the cleaning body is delayed further by the hysteresis structure through friction when the transmission block starts to rotate forward, thus further enhancing the success rate of controlling the descending and ascending of the cleaning body.

Optionally, the fixed base is cylindrical in shape, both the transmission block and the cleaning body extend into the fixed base, the hysteresis structure is arranged between an inner wall of the fixed base and the cleaning body. Designing the fixed base as cylindrical in shape facilitates the arrangement of the hysteresis structure while protecting the transmission block and cleaning body extending into interior of the fixed base, reducing the probability of debris entering the cavity.

Optionally, the hysteresis structure includes a helical sliding ramp formed on the inner wall of the fixed base and a protrusion formed on the cleaning body, wherein the protrusion slides along the helical sliding ramp during the descent of the cleaning body from the second preset position to the first preset position, and when the cleaning body is in the first preset position, the protrusion is separated from the helical sliding ramp and is spaced apart from the inner wall of the fixed base by a gap. By designing the hysteresis structure as above, on one hand, the hysteresis effect is achieved through friction resulting from the sliding of the protrusion relative the helical sliding ramp; on the other hand, when the cleaning body is in the first set position, the protrusion is separated from the helical ramp 50 an is spaced apart from the inner wall of the fixed base by gap, such that the hysteresis structure will no longer function when the cleaning body is in the first set position, to prevent the protrusion from continuously rubbing against the inner wall of the fixed base during the operation of the cleaning body, thus avoiding interference with normal cleaning, and extending service life of the cleaning assembly.

Optionally, the inner wall of the fixed base is arranged with a helical step, the surface of which constitutes the helical sliding ramp.

Optionally, the helical sliding ramp has a helical sliding ramp segment and a third limiting portion formed at an end of the helical sliding ramp segment, and the protrusion presses against the third limiting portion when the cleaning body is in the second preset position.

Furthermore, the present application provides a cleaning apparatus including a housing, wherein a power source and a control unit are arranged inside the housing, and the cleaning assembly for the cleaning apparatus as described in any of the above technical solutions is arranged below the housing; the transmission block is fixedly arranged at the output shaft of the power source; the control unit is in signal connection with a sensor for real-time monitoring of environment of the surface to be cleaned, and the control unit is configured to control the power source to drive the transmission block to rotate forward or reversely based on information monitored by the sensor. The beneficial effects of the cleaning apparatus provided in the present application are similar to those of the aforementioned cleaning assembly and will not be repeated.

These features and advantages of the present application will be detailed in the following detailed description and drawings. The best embodiments or means of the present application will be fully illustrated in conjunction with the drawings but are not limitations to the technical solutions. Furthermore, features, elements, and components appearing in each description and drawing may be multiple, and are marked with different symbols or numbers for convenience of representation, but they denote parts with the same or similar structure or function.

### Brief Description of the Drawings

The drawings described herein are provided for further understanding of the present application and constitute a part of the present application. The illustrative embodiments and descriptions in the present application are used to illustrate the present application and do not constitute an undue limitation on the present application.
FIG. 1 is a schematic structure diagram 1 of a cleaning assembly for a cleaning apparatus assembled with a drive motor provided by an embodiment of the present application;
FIG. 2a is a schematic structure diagram 2 of the cleaning assembly assembled with the drive motor provided by an embodiment of the present application;
FIG. 2b is a schematic diagram of the embodiment shown in FIG. 2a from another perspective ;
FIG. 3a is an exploded view of the cleaning assembly assembled with the drive motor provided by an embodiment;
FIG. 3b is an exploded view of the embodiment shown in FIG. 3a from another perspective;
FIG. 3c is a schematic structure diagram of a cover installed on a cleaning base in the cleaning assembly provided by an embodiment;
FIG. 3d is an enlarged view of the structure shown in FIG. 3c;
FIG. 3e is a cross-sectional view of the structure shown in FIG. 3c;
FIG. 3f is a schematic diagram of a connection structure for connecting the drive motor with a fixed base and a transmission block in the cleaning assembly provided by an embodiment;
FIG. 3g1 is a schematic structure diagram of the cleaning assembly shown in FIG. 3a once installed (excluding the fixed base);

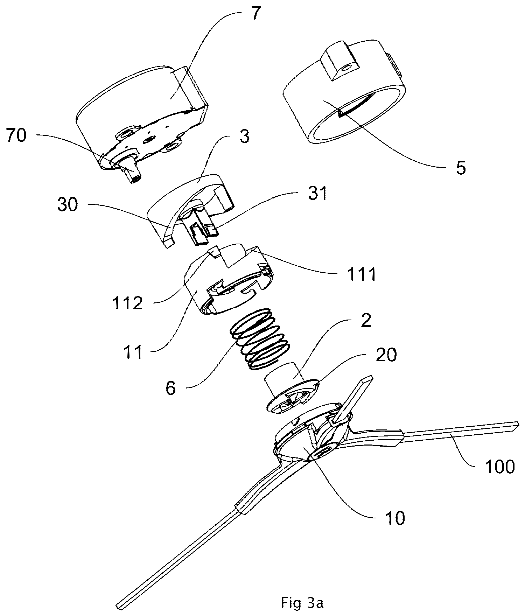

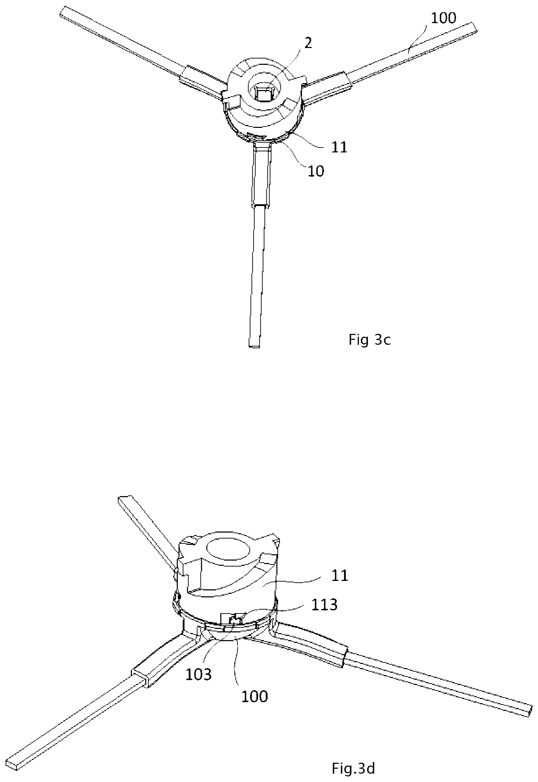

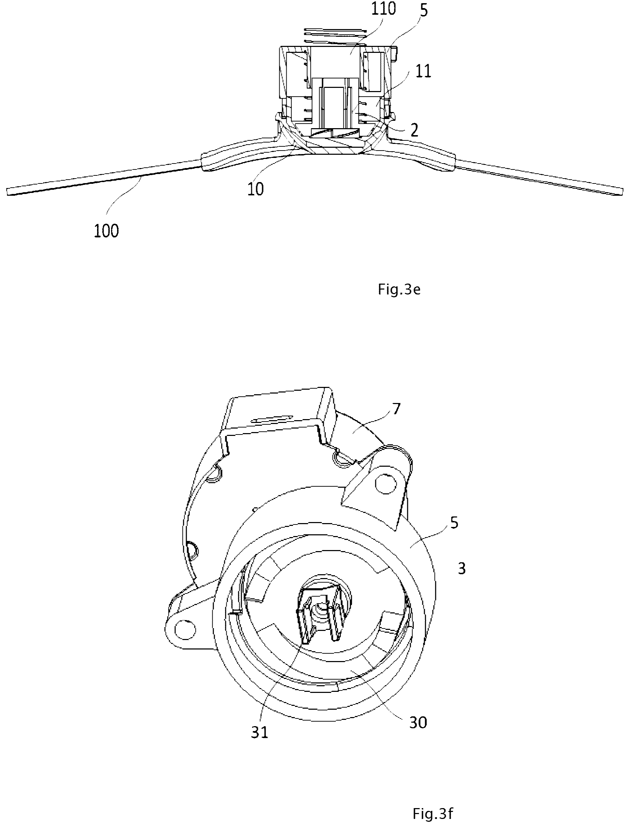

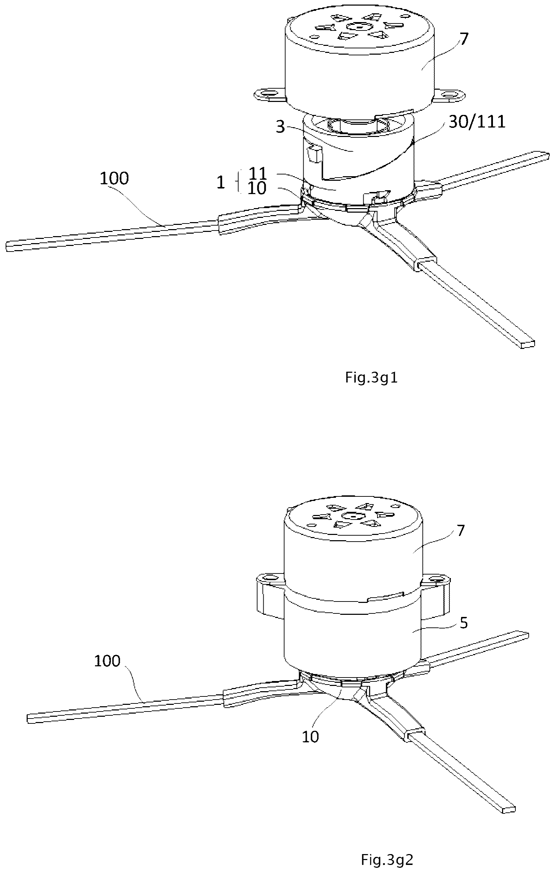

FIG. 3g2 is a schematic structure diagram of the cleaning assembly shown in FIG. 3a once installed (including the fixed base);

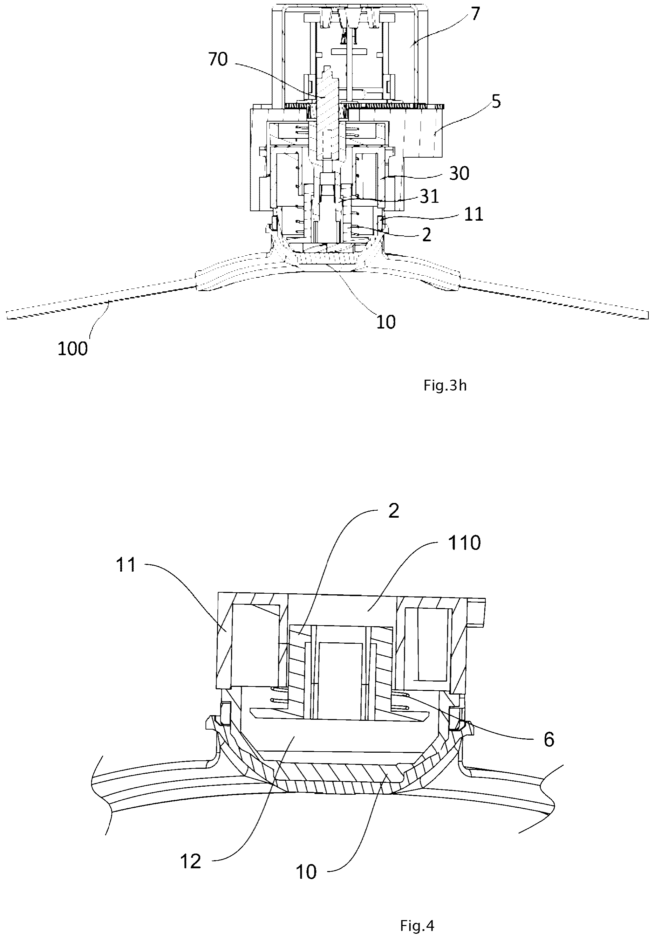

FIG. 3h is a cross-sectional view of the cleaning assembly shown in FIG. 3g2;
FIG. 4 is a cross-sectional view showing a relative position between the cleaning body and the rotating block when the cleaning body descends to a first preset position;

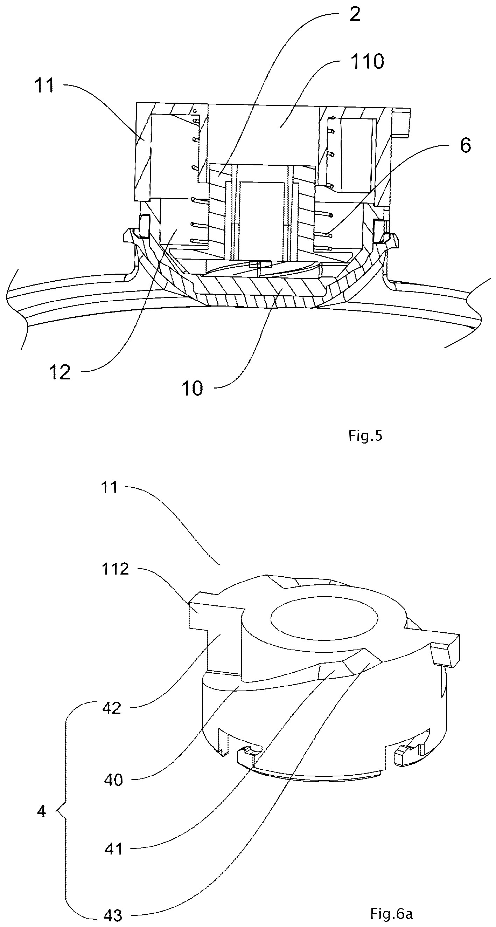

FIG. 5 is a cross-sectional view showing a relative position of the cleaning body and the rotating block when the cleaning body ascends to a second preset position;
FIG. 6a is a schematic structure diagram of the cover from a first perspective;

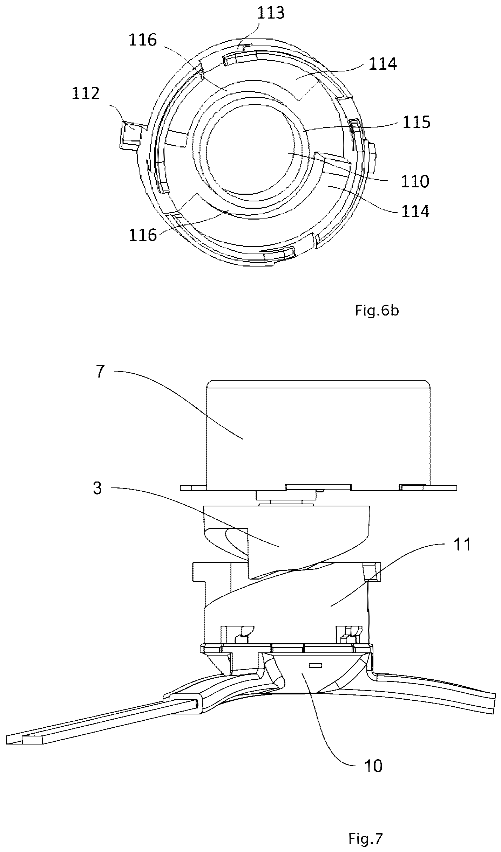

FIG. 6b is a schematic structure diagram of the cover from a second perspective;
FIG. 7 is a side view of the cleaning assembly assembled with the drive motor provided by an embodiment;

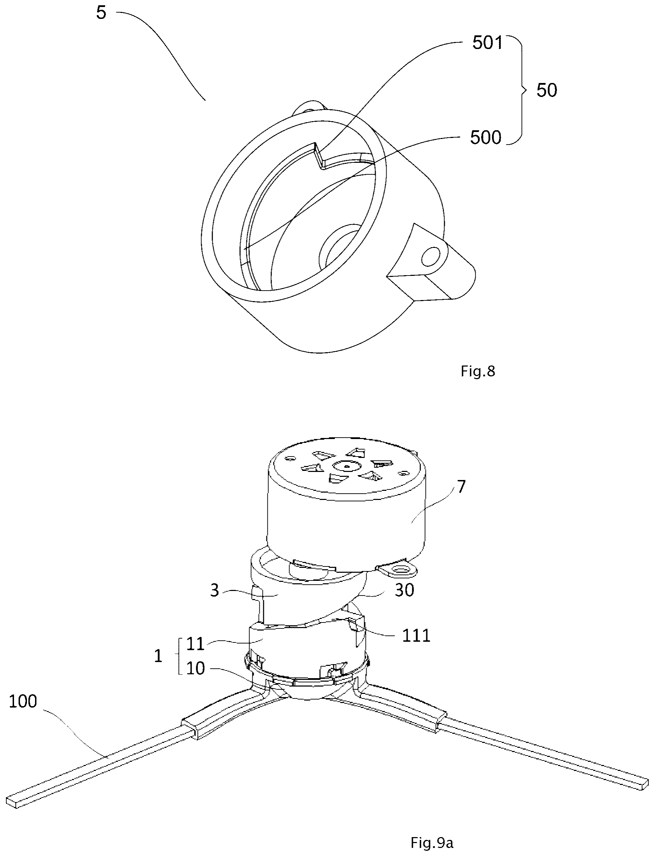

FIG. 8 is a schematic structure diagram of the fixed base in an embodiment;
FIG. 9a is a schematic stereostructure of the cleaning assembly in the state shown in FIG. 7 in an embodiment;

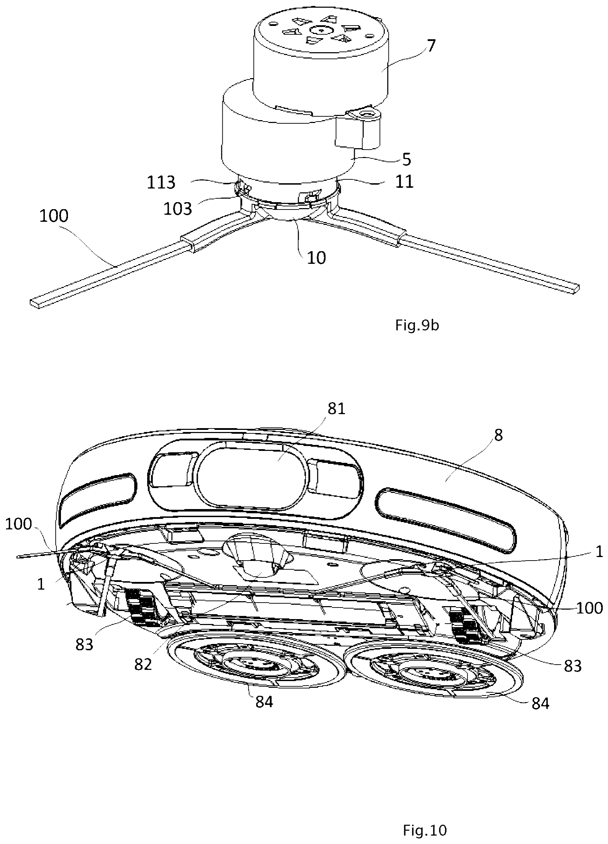

FIG. 9b is a schematic diagram of the connection structure of the cleaning assembly with the installed fixed base provided in the embodiment in the state shown in FIG. 7;
FIG. 10 is a schematic structure diagram of a cleaning apparatus provided by an embodiment;

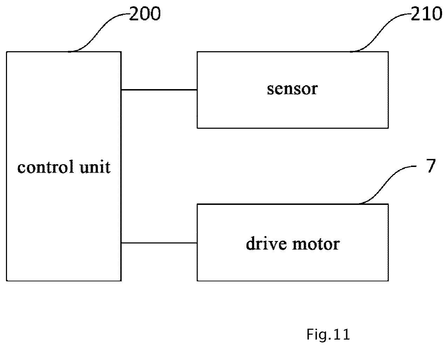

FIG. 11 is a circuit schematic diagram of the cleaning apparatus provided by an embodiment.

Wherein, 1. Cleaning body; 10. Cleaning base; 100. Brush body; 101. Side brush soft rubber; 103. Buckle; 11. Cover; 110. Channel; 111. Second helical ramp; 112. Protrusion; 113. Bayonet; 114. Internal ramp; 115. Internal guide cylinder; 116. Installation spacing; 12. Cavity;
2. Rotating block; 20. Surrounding edge;
3.Transmission block; 30. First helical ramp; 31. Claw;
4.Helical ramp structure; 40. Ramp segment; 41. Planar segment; 42. First limiting portion; 43. Second limiting portion;
5.Fixed base; 51. Connection lug of fixed base; 50. Helical sliding ramp; 500. Helical sliding ramp segment; 501. Third limiting portion; 6.Elastic member;
7.Drive motor; 70. Output shaft; 71. Lug of drive motor;
8. Housing of sweeper; 81. Camera window; 82. Guide wheel; 83. Travel wheel; 84. Mop holder; 200. Control unit; 210. Sensor.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

The phrases "one embodiment," "instance" or "example" cited in the description mean that specific features, structures, or characteristics described in connection with the embodiment may be included in at least one embodiment of the present application. The appearance of the phrase "in one embodiment" at various locations in the description does not necessarily refer to the same embodiment.

Embodiment: This embodiment provides a cleaning assembly for a cleaning apparatus, wherein the cleaning assembly can rotate under drive of a power source inside the cleaning apparatus, to clean a surface to be cleaned. In the embodiment, the cleaning apparatus is described by taking the sweeper as an example, and the cleaning assembly is described by taking a side brush assembly in the sweeper as an example. It can understood that, the cleaning assembly and the cleaning apparatus are not limited to the above side brush assembly and the sweeper.

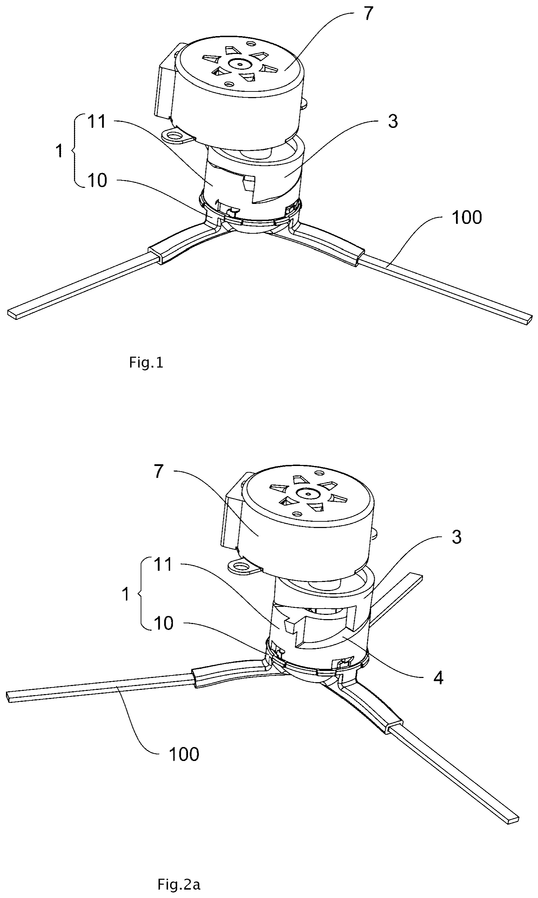

The present application provides a cleaning assembly for a cleaning apparatus, configured to rotate under drive of a power source to clean a surface to be cleaned. As shown in FIGS. 1 to 5, the cleaning assembly includes: a cleaning body 1, a rotating block 2, and a transmission block 3. A cavity 12 is formed inside the cleaning body 1, and the cleaning body 1 has a channel 110 connecting the cavity 12 with the outside. The rotating block 2 is arranged within the cavity 12 and can slide relative to the cleaning body 1 along the channel 110. The transmission block 3 is fixedly installed between the rotating block 2 and an output shaft of the power source, and can drive the rotating block 2 to rotate under drive of the power source.

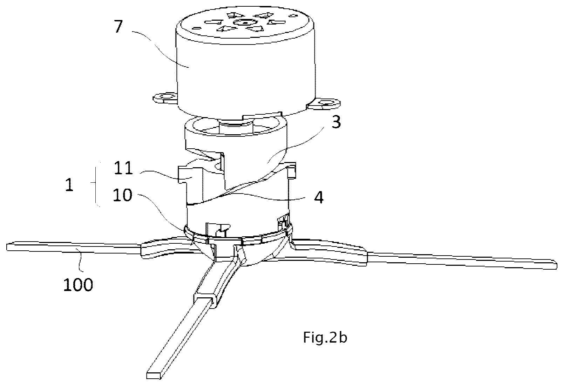

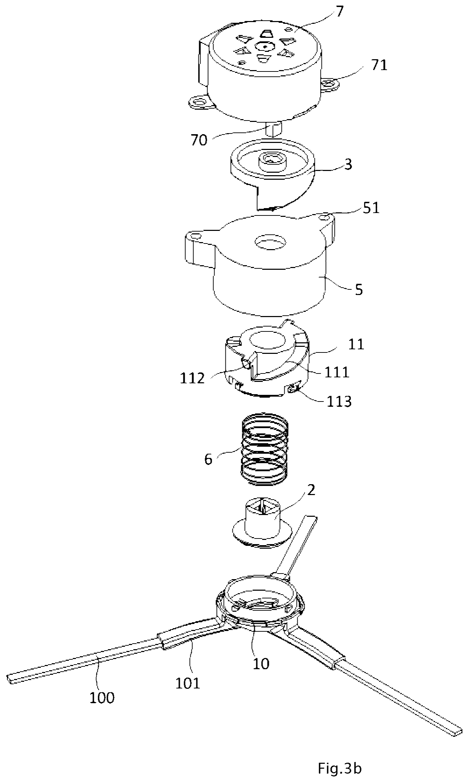

Specifically, as shown in FIGS. 1 to 2b, the transmission block 3 and the cleaning body 1 are in transmission cooperation via a helical ramp structure 4. Moreover, as shown in FIGS. 2a, 2b, 3a, and 3b, an elastic member 6 in a compressed state is arranged between the rotating block 2 and the cleaning body 1, such that the cleaning body 1 descends under the pressing action of the transmission block 3 to a first preset position suitable for cleaning when the transmission block 3 rotates forward, as shown in FIG. 2b, and the cleaning body 1 ascends under the action of the elastic member 6 to a second preset position suitable for obstacle avoidance when the transmission block 3 rotates reversely, as shown in FIG. 1.

In this embodiment, by arranging the transmission block between the cleaning body and the power source and arranging the helical ramp structure between the transmission block and the cleaning body for transmission cooperation, when the transmission block rotates forward, the cleaning body does not synchronously rotate with the rotation of the transmission block due to inertia. Since the transmission block only rotates without descending or ascending, the helical ramp structure exerts a pushing and pressing action on the cleaning body, to drive the cleaning body to descend to the first preset position suitable for cleaning.

When the transmission block rotates reversely, the cleaning body 1 also does not synchronously rotate with the rotation of the transmission block due to inertia, and under the elastic force of the elastic member 6, the cleaning body 1 is driven to ascend and return to its original position, i.e., the second preset position suitable for obstacle avoidance.

In this way, the purpose of switching the cleaning body 1 between the first preset position and the second preset position is achieved; meanwhile, the cleaning assembly cleverly utilizes the principle of inertia and achieves this with a simple structure, thus occupying small space and aligning with the trend of device miniaturization, while also exhibiting good adaptability to existing cleaning apparatuses (due to the cleaning assembly occupies small space, there is generally no need to make larger exterior design for existing cleaning apparatus) and having low manufacturing costs.

In this embodiment, as shown in FIGS. 1 to 3b, the power source may be a drive motor, and the cleaning assembly can rotate under the drive of the drive motor 7 to clean the surface to be cleaned. As shown in FIGS. 3a and 3b, the cleaning assembly may further include a fixed base 5. That is, the cleaning assembly includes the cleaning body 1, the rotating block 2, the transmission block 3, the elastic member 6, and the fixed base 5. The cleaning body 1 includes a cleaning base 10 and a cover 11. Three brush bodies 100 are arranged on the cleaning base 10 circumferentially (the number and structure of brush bodies do not constitute limitations on the present application and can be set according to actual needs). During rotation of the cleaning assembly, the three brush bodies 100 can clean the surface to be cleaned. As shown in FIGS. 3a and 3b, the brush bodies 100 may be connected to the bottom of the cleaning base 10 via side brush soft rubber 101.

The cover 11 is detachably assembled on the cleaning base 10. Specifically, as shown in FIGS. 3a to 3d, in the embodiment, the cover 11 is snap-fitted to the cleaning base 10 via bayonets 113 arranged circumferentially at the bottom of the cover 11 and buckles 103 arranged circumferentially at the cleaning base 10. In other embodiments, the detachable connection may also be achieved by threaded connection, plug-in connection, etc.

Furthermore, as shown in FIGS. 3h, 4, and 5, a cavity 12 is formed between the cover 11 and the cleaning base 10, and the cover 11 is provided with a channel 110 connecting the cavity 12 with the outside. The rotating block 2 and the elastic member 6 are both assembled within the cavity 12. The elastic member 6 is arranged between the rotating block 2 and the cover 11 and compressed by the rotating block 2 and the cover 11. The rotating block 2 in the embodiment can slide relative to the cleaning body 1 along the channel 110. In this relative sliding, the cleaning body 1 is enabled to descend or ascend, and the compression degree of the elastic member 6 changes with the descending or ascending of the cleaning body 1. The transmission block 3 is located outside the cavity 12 but is provided with a claw 31 extending into the cavity 12. The transmission block 3 is fixedly snap-fitted with the rotating block 2 via the claw 31.

As shown in FIGS. 3a to 3h, the transmission block 3 is configured to assemble with the output shaft 70 of the power source of the cleaning apparatus. In the embodiment, the power source is the drive motor 7. Thus, under the drive of the drive motor 7, both the transmission block 3 and the rotating block 2 can rotate. Through the above components, and by designing the transmission block 3 and cleaning body 1 to be in transmission cooperation via the helical ramp structure 4, the following purpose is achieved: when the transmission block 3 rotates forward, the cleaning body 1 descends under the pressing action of the transmission block 3 to the first preset position suitable for cleaning, and when the transmission block 3 rotates reversely, the cleaning body 1 ascends under the action of the elastic member 6 to the second preset position suitable for obstacle avoidance.

It should be noted that FIGS. 1, 2a, and 2b do not show the fixed base 5 outside the cleaning body 1 and transmission block 3 in order to illustrate the cleaning body 1 and the transmission block 3, while the exploded view in FIG. 3a shows the fixed base 5. As easily understood from lugs 71 of the drive motor 7 protruding from the enclosure of the drive motor 7 in FIGS. 1, 2a, 2b, 3a, and 3b, in the embodiment, the fixed base 5 is connected to the enclosure of the drive motor 7 by arranging connection lugs 51 and using bolt thread. As shown in FIGS. 3f to 3h, the fixed base 5 encloses the transmission block 3 and a part of the cleaning body 1 once installed on the enclosure of the drive motor 7. The arranging of the fixed base 5 in the cleaning assembly provided in the embodiment is a preferred solution. In some other embodiments, the fixed base 5 may not be arranged, as shown in the structure of the cleaning assembly shown in FIGS. 1 and 2a. The function of the fixed base 5 will be detailed later.

By arranging the transmission block 3 between the cleaning body 1 and the drive motor 7 and arranging the helical ramp structure 4 between the transmission block 3 and the cleaning body 1 for transmission cooperation, when the transmission block 3 rotates forward, the cleaning body 1 does not synchronously rotate with the rotation of the transmission block 3 due to inertia. Since the transmission block 3 only rotates without descending or ascending, the helical ramp structure 4 exerts a pushing and pressing action on the cleaning body 1, to drive the cleaning body 1 to descend. When the transmission block 3 rotates reversely, the cleaning body 1 also does not synchronously rotate with the rotation of the transmission block 3 due to inertia, and the cleaning body 1 is driven to ascend and return to its original position under the elastic force of the elastic member 6. In this way, the purpose of switching the cleaning body 1 between the first preset position and the second preset position is achieved. The cleaning assembly cleverly utilizes the principle of inertia and achieves descending/ascending with a simple structure, thus occupying small space and aligning with the trend of device miniaturization, while also exhibiting good adaptability to existing cleaning apparatuses (due to the cleaning assembly occupies small space, there is generally no need to make larger exterior design for existing cleaning apparatus), and having low manufacturing costs. Specifically, in the embodiment, the transmission block 3 is directly assembled with the output shaft 70 of the power source without an intermediate transmission mechanism, making the structure more compact.

FIGS. 3g1 and 3g2 show a state in which the cleaning body 1 is ascending. As shown in FIGS. 3g1, in the state in which the cleaning body 1 is ascending, the second helical ramp 111 of the cover 11 is in tight cooperation with the first helical ramp 30 of the transmission block 3, to enable the cleaning body 1 to be in the ascending state. As shown in FIG. 3g2, in the state in which the cleaning body 1 is ascending, the fixed base 5 almost covers the entire cover 11 and transmission block 3.

It should be noted that "forward rotation" in the embodiment does not specifically refer to clockwise or counterclockwise rotation, and is set according to the needs of the cleaning apparatus. For example, in the embodiment, the counterclockwise rotation is used as the forward rotation direction, while the corresponding reverse rotation refers to clockwise rotation. Furthermore, both "ascend" or "descend" in the embodiment are relative to the surface to be cleaned.

As shown in FIGS. 2b, 3a, and 3b, the helical ramp structure 4 in the embodiment includes a first helical ramp 30 formed on the transmission block 3 and a second helical ramp 111 formed on the cleaning body 1. The first helical ramp 30 and the second helical ramp 111 are adapted to each other. Each of the first helical ramp 30 and the second helical ramp 111 has a continuous ramp segment and a planar segment. In combination with those shown in FIG. 6a, the description in the embodiment is made by taking the second helical ramp 111 on the cleaning body 1 (i.e., on the cover 11) as an example. When the transmission block 3 rotates forward, as per the principle described above, the cleaning body 1 cannot instantaneously synchronously rotate forward with the forward rotation of the transmission block 3 due to inertia, the ramp segment of the first helical ramp 30 will press against the ramp segment 40 of the second helical ramp 111, and the cleaning body 1 will descend under the pressing action until to the first preset position. When the cleaning body 1 descends to the first preset position, the planar segment of the first helical ramp 30 and the planar segment 41 of the second helical ramp 111 press against each other. In this way, although the elastic member 6 is compressed at this time, the cleaning body 1 can be maintained at the first preset position (it can only rotate with the transmission block 3 but cannot ascend/descend) due to the limiting function resulting from the planar segment of the first helical ramp 30 and the planar segment 41 of the second helical ramp 111 pressing against each other.

Further, as shown in FIG. 6a, each of the first helical ramp 30 and the second helical ramp 111 in the embodiment has a first limiting portion 42 on a side of the ramp segment 40 and a second limiting portion 43 on a side of the planar segment 41. The first limiting portion 42 and the second limiting portion 43 are configured to limit the ascending and descending stroke of the cleaning body 1 between the first preset position and the second preset position. In combination with those shown in FIG. 6a, the description in the embodiment is made by taking the first helical ramp 30 located on the cleaning body 1 (i.e., on the cover 11) as an example. In combination with those shown in FIGS. 1 and 6a, when the cleaning body 1 is in the second preset position, the first limiting portion on the first helical ramp 30 contacts the first limiting portion 42 on the second helical ramp 111, and the two first limiting portions cooperates to restrict the cleaning body 1 at the second preset position and prevent the cleaning body 1 from further ascending.

As shown in FIGS. 2a, 2b, 6a, and 7, each of the first helical ramp 30 on the transmission block 3 and the second helical ramp 111 on the cleaning body 1 has the second limiting portion 43. When the cleaning body 1 is in the first preset position, the second limiting portion on the first helical ramp 30 contacts the tail of the ramp segment 40 of the second helical ramp 111 to form a limiting, and the second limiting portion 43 of the second helical ramp 111 contacts the tail of the ramp segment 40 of the first helical ramp 30 to form a limiting, thereby restricting the cleaning body 1 at the first preset position and preventing the cleaning body 1 from further descending. FIG. 7 shows a schematic diagram showing the cleaning body 1 about to descend to the first preset position, at which point the planar segment of the first helical ramp 30 and the planar segment 41 of the second helical ramp 111 are about to make surface-to-surface contact.

Referring to FIG. 6b, two internal ramps 114 connected to the top inner wall and an internal guide cylinder 115 extending downward from a mounting hole at the center of the top inner wall are provided inside the cover 11 of the embodiment. The positions of the internal ramps 114 correspond to the two second helical ramps 111 on the top outer wall. The internal guide cylinder 115 configured to form the channel 110 to accommodate the top of the rotating block 2, and the channel 110 provides an accommodating space for the up-down movement of the top of the rotating block 2. An installation spacing 116 is formed between the two internal ramps 114 and the internal guide cylinder 115, to accommodate the elastic member 6, i.e., a spring.

As mentioned above, the cleaning body 1 in the embodiment includes the cleaning base 10 and the cover 11 detachably assembled on the cleaning base 10. The advantage of this structure is ease of assembly. When assembling the cleaning assembly, the elastic member 6 is assembled with the cover 11 firstly, then the claw 31 of the transmission block 3 passes through the channel 110 in the cover 11 to assemble with the rotating block 2 while enabling the elastic member 6 to be assembled with the rotating block 2. Then the above assembled assembly as a whole is assembled with the cleaning base 10, which is achieved simply by snap-fitting the cover 11 to the cleaning base 10.

It follows that, the cleaning body 1 is designed as the structure in the embodiment for the purpose of ease of assembly. In other embodiments, the cleaning body may be designed as a structure in other forms, as long as it can form a cavity for accommodating the rotating block and elastic member therein, and form a channel for descending and ascending and sliding relative to the rotating block, and also form a second helical ramp outside the cleaning body. For example, the cleaning body may be designed as a cylindrical shell, wherein the cavity is formed inside the shell, the second helical ramp is formed outside the shell, the channel is formed at the upper part of the shell, and a mounting hole for accommodating the rotating block and the elastic member therein is formed at the lower part of the shell.

Furthermore, the elastic member 6 in the embodiment is a spring. The rotating block 2 is formed with a surrounding edge 20. One end of the spring is arranged on the inner wall of the cover 11, and the other end of the spring press against the surrounding edge 20. It can be understood that, in other embodiments, the elastic member 6 may be an elastic sheet and other components.

As mentioned above, the embodiment provides the cleaning assembly with the fixed base 5, which is configured to be cable of being fixedly installed on the cleaning apparatus (in the embodiment, the fixed base 5 is fixedly installed on the enclosure of the drive motor; alternatively, the fixed base 5 may be installed on the housing of the cleaning apparatus).

In the embodiment, a hysteresis structure is also arranged between the fixed base 5 and the cleaning body 1. The hysteresis structure is configured to delay the rotation movement of the cleaning body 1 via friction when the transmission block 3 starts to rotate forward. In this way, in addition to the inertia effect, the rotation movement of the cleaning body 1 is delayed further by the hysteresis structure through friction when the transmission block 3 starts to rotate forward, thus further enhancing the success rate of controlling the descending and ascending of the cleaning body 1.

As shown in FIG. 8, the fixed base 5 in the embodiment is cylindrical in shape. Both the transmission block 3 and the cleaning body 1 extend into the fixed base 5. The hysteresis structure is arranged between the inner wall of the fixed base 5 and the cleaning body 1. Designing the fixed base 5 as cylindrical in shape facilitates the arrangement of the hysteresis structure while protecting the transmission block 3 and cleaning body 1 extending into interior of the fixed base 5, reducing the probability of debris entering the cavity 12.

Combining with those shown in FIGS. 6a and 8, the hysteresis structure in the embodiment includes a helical sliding ramp 50 formed on the inner wall of the fixed base 5 and a protrusion 112 formed on the cleaning body 1. The protrusion 112 is configured to slide along the helical sliding ramp 50. Also, the protrusion 112 is configured to slide along the helical sliding ramp 50 during the descent of the cleaning body 1 from the second preset position to the first preset position. When the cleaning body 1 is in the first preset position, the protrusion 112 is separated from the helical sliding ramp 50 and is spaced apart from the inner wall of the fixed base 5 by a gap.

The principle of cooperation between the protrusion 112 and the helical sliding ramp 50 is described in combination the ascending and descending process of the cleaning body 1: when the transmission block 3 starts to rotate forward, the cleaning body 1 does not instantaneously rotate with the rotation of the transmission block 3; the cleaning body 1 moves downward under the pressing action the transmission block 3; meanwhile, since the protrusion 112 can slide on the helical sliding ramp 50, friction between the protrusion 112 and the helical sliding ramp 50 further hinders the cleaning body 1 from following the forward rotation of the transmission block 3. During this process, the cleaning body 1 descends to the first preset position in a helical motion form. Thereafter, the cleaning body 1 rotates forward following the transmission block 3 for normal cleaning. When the cleaning body 1 needs to be lifted, the transmission block 3 rotates reversely, and the cleaning body 1 maintains the forward rotation at this point due to inertia, causing the planar segments 41 on the cleaning body 1 and the transmission block 3 to disengage with each other and thus losing the limiting effect; the cleaning body 1 will ascend to the second preset position under the elastic force of the elastic member 6. The ascent motion of the cleaning body 1 may take three forms, mainly depending on the position of projection of the protrusion 112 in up-down direction relative to the helical sliding ramp 50 at the instant when the transmission block 3 switches from forward rotation to reverse rotation. If the projection of the protrusion 112 in up-down direction falls at the tail end of the helical sliding ramp 50, the protrusion 112 instantaneously comes into contact with the helical sliding ramp 50 and slides along the helical sliding ramp 50, and then the cleaning body 1 will ascend to the second preset position in a helical motion form. If the projection of the protrusion 112 in up-down direction falls at the head end of the helical sliding ramp 50, the cleaning body 1 will ascend to the second preset position in approximately linear motion form. If the projection of the protrusion 112 in up-down direction falls between the head end and tail end of the helical sliding ramp 50, the cleaning body 1 will first undergo a short linear ascent and then perform a helical motion to ascend to the second set position.

By designing the hysteresis structure as above, on one hand, the hysteresis effect is achieved through friction resulting from the sliding of the protrusion 112 relative the helical sliding ramp 50; on the other hand, when the cleaning body 1 is in the first set position, the protrusion 112 is separated from the helical ramp 50 an is spaced apart from the inner wall of the fixed base 5 by gap, such that the hysteresis structure will no longer function when the cleaning body 1 is in the first set position, to prevent the protrusion 112 from continuously rubbing against the inner wall of the fixed base 5 during the operation of the cleaning body 1, thus avoiding interference with normal cleaning, and extending service life of the cleaning assembly. For ease of manufacturing, the inner wall of the fixed base 5 in the embodiment is provided with a helical step, a surface of which constitutes the helical sliding ramp 50.

Further, as shown in FIG. 8, the helical sliding ramp 50 in the embodiment has a helical sliding ramp segment 500 and a third limiting portion 501 formed at an end of the segment. The protrusion 112 and the third limiting portion 501 press against each other when the cleaning body 1 is in the second preset position. The third limiting portion 501 functions similarly to the first limiting portion 42, both of which play a limiting role when the cleaning body 1 is in the second preset position.

The embodiment shows a preferred hysteresis structure. In other embodiments, the hysteresis structure may be simply designed as a projection on the inner wall of the fixed base; alternatively, the projection can be obtained by fixedly arranging a mounting bracket directly on the housing of the cleaning apparatus or the enclosure of the drive motor and forming the above projection on the mounting bracket, without adopting a fixed base. Friction between the projection and the protrusion provides the hysteresis effect. The projection may mimic the shape of the helical sliding ramp in the present application to rub against the protrusion throughout the entire descent of the cleaning body, or the projection can be designed as a block shaped part to rub against the outer surface of the cleaning body during the descent of the cleaning body.

Furthermore, the cleaning assembly shown in FIG. 7 is in a state where the cleaning body 1 is descending. Specifically, as shown in FIG. 9a, in the state where the cleaning body 1 is descending, the second helical ramp 111 of the cover 11 is partially engaged with the first helical ramp 30 of the transmission block 3, to cause the cleaning body 1 in the descending state. As shown in FIG. 9b, in the state where the cleaning body 1 is descending, the fixed base 5 only fully covers the transmission block 3, and cannot fully cover the cover 11, with a part of the sidewall and the bayonets 113 at the bottom of the cover 11 being exposed outside the fixed base 5.

The embodiment of the present application also provides a cleaning apparatus including a housing, wherein a power source and a control unit are arranged inside the housing, the cleaning assembly for the cleaning apparatus as described in the preceding embodiments is arranged below the housing; the transmission block 3 is fixedly arranged at the output shaft 70 of the power source; the control unit is in signal connection with a sensor for real-time monitoring of the environment of the surface to be cleaned, and the control unit is configured to control the power source to drive the transmission block 3 to rotate forward or reversely based on information monitored by the sensor.

Referring to FIG. 10, the cleaning assembly may be a side brush. As shown in FIG. 10, the cleaning apparatus may be a sweeper, including a sweeper housing 8, a camera window 81 for installing a camera, a guide wheel 82 and travel wheels 83 for enabling omnidirectional movement, two side brushes 1 (i.e., the aforementioned cleaning body 1), and two mop holders 84.

The specific structure of the side brush 1 can be referred to the previous embodiment and will not be repeated. As shown in FIG. 10, the brush bodies 100 of the two side brushes 1 protrude from the sweeper housing 8. The two side brushes 1 are installed at the bottom of the housing 8 on both sides of the guide wheel 82, respectively. In the absence of obstacles, the two side brushes 1 clean the ground. When encountering an obstacle, the two side brushes 1 retract toward the sweeper housing 8 to cross the obstacle. The two mop holders 84 are configured to install mopping cloths, which are used to clean the ground during sweeping of the sweeper.

When using the cleaning apparatus equipped with the cleaning assembly provided in the embodiment, the control unit is in signal connection with the sensor for real-time monitoring. of the environment of the surface to be cleaned, and the control unit is configured to control the power source to drive the transmission block 3 to rotate forward or reversely based on information monitored by the sensor. That is, when the sensor monitors that there is an to-be-crossed obstacle on the detected surface (for example, it is determined that there is an to-be-crossed obstacle on the detected surface based on the image captured by the camera), the sensor sends a signal to the control unit, and the control unit then drives the cleaning assembly to ascend to the second set position by controlling the power source to change the rotation direction of the output shaft 70, and after the cleaning apparatus has moved away from the obstacle, the control unit drives the cleaning assembly to descend to the first set position by controlling the power source to change the rotation direction of the output shaft 70, and cleaning is continued.

In the initial state (that is, before the cleaning apparatus starts working), the cleaning assembly is generally set to be in the lifted state, i.e., the cleaning body 1 of the cleaning assembly is in the second preset position. When the cleaning apparatus prepares to work, firstly the transmission block 3 is controlled to rotate forward to drive the cleaning body 1 to descend to the first preset position, and continued forward rotation of the transmission block 3 can drive the cleaning body 1 to follw the forward rotation and perform cleaning operation. When avoiding the obstacle or after completing the cleaning operation, the transmission block 3 is controlled to rotate reversely, to drive the cleaning body 1 to ascend to the second preset position. The advantage of is that the degree of deformation of the elastic member due to compression is relatively small in the second set position state, which is beneficial for the service life of the cleaning assemble.

As shown in FIG. 11, the control unit 200 is electrically connected to the sensor 210 and the drive motor 7. The control unit 200 controls the power source (the drive motor 7 in FIG. 11) to drive the transmission block 3 to drive forward or reversely based on information monitored by the sensor 210.

The above descriptions are merely preferred embodiments of the present application and are not intended to limit the application. Any modifications, equivalent replacements, or improvements made within the spirit and principles of the present application shall be included within the scope of protection of the present application.

## Claims

1. A cleaning assembly for a cleaning apparatus, configured to rotate under drive of a power source to clean a surface to be cleaned, wherein the cleaning assembly comprises:
a cleaning body (1), wherein a cavity (12) is formed inside the cleaning body (1) and the cleaning body (1) has a channel (110) connecting the cavity (12) with outside;
a rotating block (2), arranged within the cavity (12) and capable of sliding relative to the cleaning body (1) along the channel (110); and
a transmission block (3), fixedly installed between the rotating block (2) and an output shaft of the power source and capable of driving the rotating block (2) to rotate under drive of the power source;
wherein the transmission block (3) and the cleaning body (1) are in transmission cooperation via a helical ramp structure (4), and an elastic member (6) in a compressed state is arranged between the rotating block (2) and the cleaning body (1), such that the cleaning body (1) descends under a pressing action of the transmission block (3) to a first preset position suitable for cleaning when the transmission block (3) rotates forward, and the cleaning body (1) ascends under an action of the elastic member (6) to a second preset position suitable for obstacle avoidance when the transmission block (3) rotates reversely.

2. The cleaning assembly for the cleaning apparatus according to claim 1, wherein the helical ramp structure (4) comprises a first helical ramp (30) formed on the transmission block (3) and a second helical ramp (111) formed on the cleaning body (1), the first helical ramp (30) and the second helical ramp (111) being adapted to each other.

3. The cleaning assembly for the cleaning apparatus according to claim 2, wherein each of the first helical ramp (30) and the second helical ramp (111) has a continuous ramp segment (40) and a planar segment (41), and the planar segment (41) of the first helical ramp (30) and the planar segment (41) of the second helical ramp (111) press against each other when the cleaning body (1) is in the first preset position.

4. The cleaning assembly for the cleaning apparatus according to claim 3, wherein each of the first helical ramp (30) and the second helical ramp (111) further has a first limiting portion (42) on a side of the ramp segment (40) and a second limiting portion (43) on a side of the planar segment (41), the first limiting portion (42) and the second limiting portion (43) being configured to limit an ascending and descending stroke of the cleaning body (1) between the first preset position and the second preset position.

5. The cleaning assembly for the cleaning apparatus according to claim 1, wherein the cleaning body (1) comprises a cleaning base (10) and a cover (11) detachably assembled on the cleaning base (10), the cavity (12) is formed between the cover (11) and the cleaning base (10), and the cover (11) forms the channel (110);
the elastic member (6) is located within the cavity (12), and the helical ramp structure (4) is formed between the cover (11) and the transmission block (3).

6. The cleaning assembly for the cleaning apparatus according to claim 5, wherein the elastic member (6) is a spring, the rotating block (2) is formed with a surrounding edge (20), one end of the spring is arranged on an inner wall of the cover (11), and the other end of the spring presses against the surrounding edge (20).

7. The cleaning assembly for the cleaning apparatus according to claim 1 or 5, wherein the cleaning assembly further comprises a fixed base (5) which is configured to be cable of being fixedly installed on the cleaning apparatus, a hysteresis structure is arranged between the fixed base (5) and the cleaning body (1), and the hysteresis structure is configured to delay a rotation movement of the cleaning body (1) via friction when the transmission block (3) starts to rotate forward.

8. The cleaning assembly for the cleaning apparatus according to claim 7, wherein the fixed base (5) is cylindrical in shape, both the transmission block (3) and the cleaning body (1) extend into the fixed base (5), and the hysteresis structure is arranged between an inner wall of the fixed base (5) and the cleaning body (1).

9. The cleaning assembly for the cleaning apparatus according to claim 8, wherein the hysteresis structure comprises a helical sliding ramp (50) formed on the inner wall of the fixed base (5) and a protrusion (112) formed on the cleaning body (1), the protrusion (112) slides along the helical sliding ramp (50) during descent of the cleaning body (1) from the second preset position to the first preset position, and the protrusion (112) is separated from the helical sliding ramp (50) and is spaced apart from the inner wall of the fixed base (5) by a gap when the cleaning body (1) is in the first preset position.

10. The cleaning assembly for the cleaning apparatus according to claim 9, wherein the inner wall of the fixed base (5) is provided with a helical step, and a surface of the step constitutes the helical sliding ramp (50).

11. The cleaning assembly for the cleaning apparatus according to claim 9, wherein the helical sliding ramp (50) has a helical sliding ramp segment (500) and a third limiting portion (501) formed at an end of the helical sliding ramp segment (500), and the protrusion (112) abuts against the third limiting portion (501) when the cleaning body (1) is in the second preset position.

12. A cleaning apparatus, comprising a housing inside which a power source and a control unit is arranged, wherein the cleaning assembly for the cleaning apparatus according to any one of claims 1 to 11 is arranged below the housing, the transmission block (3) being fixedly arranged at an output shaft of the power source;
the control unit is in signal connection with a sensor for real-time monitoring of environment of a surface to be cleaned, and the control unit is configured to control the power source to drive the transmission block (3) to rotate forward or reversely based on information monitored by the sensor.
